Europäisches Patentamt

European Patent Office

Office européen des brevets

(11) Veröffentlichungsnummer: **0 497 338 A2**

# EUROPÄISCHE PATENTANMELDUNG

(21) Anmeldenummer: **92101533.5**

(51) Int. Cl.5: **B32B 15/14**

(22) Anmeldetag: **30.01.92**

(30) Priorität: **31.01.91 DE 9101083 U**

(43) Veröffentlichungstag der Anmeldung:
**05.08.92 Patentblatt 92/32**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Balz, Mathias, Dipl.-Ing.**
**Eschenweg 8a**
**W-8903 Bobingen 1(DE)**
Erfinder: **Schnock, Günther, Dr.**
**Grenzingstrasse 6**
**W-8903 Bobingen 2(DE)**
Erfinder: **Zerfass, Karl-Christian**
**Römerstrasse 26**
**W-8903 Bobingen 1(DE)**

(54) **Mehrschichtige Trägereinlage.**

(57) Beschrieben wird eine Trägereinlage aus mindestens einer textilen Schicht und mindestens einer Metallfolie, die durch Nadelung miteinander verbunden sind. Die in der Metallfolie durch Nadelung entstandene perforierte Fläche beträgt 8 bis 15 % der Grundfläche der Trägereinlage. Die Trägereinlage läßt sich insbesondere zur Herstellung von bituminierten Dach- und Abdeckbahnen einsetzen.

Fig. 1

EP 0 497 338 A2

Die vorliegende Erfindung betrifft eine mehrschichtige Trägereinlage, die aus mindestens einer textilen Schicht und mindestens einer Metallfolie besteht, die durch Nadelung miteinander verbunden sind, und die sich insbesondere zur Herstellung von bituminierten Dach- und Abdeckbahnen eignet.

An das Brandverhalten von Baustoffen und Bauteilen von Bedachungen werden verschiedene Anforderungen gestellt. Dach- und Abdeckbahnen, als Bestandteil von Bedachungen, müssen sich u.a. durch eine Widerstandsfähigkeit gegen Flugfeuer und strahlende Wärme auszeichnen. Durch diese Widerstandsfähigkeit soll die Ausbreitung des Feuers auf dem Dach und eine Brandübertragung vom Dach in das Innere des Gebäudes verhindert werden.

Dachbahnen aus einem Vliesstoff und einer Metallfolie und ihre Herstellverfahren sind bereits aus der DE-PS 2 827 136 bekannt und werden erhalten, indem auf einem schrumpffähigen Vliesstoff eine Metallfolie punktförmig befestigt wird. Dadurch soll eine Fältelung der Metallfolie erreicht werden, die bei einer Dehnung des geschrumpften Vlieses ein Reißen der Metallfolie verhindern soll. Die punktförmige Befestigung zwischen Vliesstoff und Metallfolie erfolgt auf mechanische Weise z.B. mit Hilfe eines Nadelstuhls oder auf thermische Weise, beispielsweise durch Verkleben der in der Hitze an ihrer Oberfläche weichgewordenen Fasern; oder die Befestigung erfolgt durch Binder oder Kleber. Die Metallfolie ist so beschaffen, daß ihr Erweichungs- und Schmelzpunkt möglichst hoch liegen und sie bei lokalem Flugfeuer als unversehrte Schicht erhalten bleibt. Dadurch wird die Ausbreitung des Brandes in die unteren Schichten der Dachbahn verhindert. Eine derartige Dachbahn besitzt die Eigenschaft einer ausgezeichneten Brandschutzwirkung.

Aus der DE-OS 3 821 011 sind mehrschichtige Trägerbahnen bekannt, die aus zwei Schichten von textilen Flächengebilden und einer dazwischenliegenden Metallschicht bestehen und sich zur Herstellung von Dach- und Abdeckbahnen eignen. Diese Trägerbahn besteht aus einem stärkeren textilen Flächengebilde als Tragschicht, einer damit verbundenen Metallfolie und einem damit verbundenem schwächeren textilen Flächengebilde als Deckschicht. Die einzelnen Schichten werden entweder partiell oder vollflächig durch einen aufgebrachten Kleber miteinander verklebt, oder durch Nadeln miteinander verbunden. Diese technisch gute Lösung der Aufgabe ist relativ aufwendig.

Derartige bekannte Dachbahnen mit einer Verstärkung aus Vliesstoff und Metallfolie zeichnen sich zwar durch eine gute Brandschutzwirkung aus, besitzen aber den Nachteil, daß unter extremen klimatischen Bedingungen die Bitumenhaftung der Deckschicht nicht ausreichend ist.

Es wurde jetzt eine mehrschichtige Trägereinlage gefunden, die eine erhöhte Haftung für die Deckschicht, bevorzugt für das Deckschichtbitumen aufweist, wobei die positiven Eigenschaften der bekannten Dachbahnen mit einer Verstärkung aus Vliesstoff und Metallfolie, speziell die der brandhemmenden Wirkungen und mechanischen Festigkeit beibehalten werden.

Gegenstand der vorliegenden Erfindung ist eine mehrschichtige Trägereinlage, die aus mindestens einer textilen Schicht und mindestens einer Metallfolie besteht, die durch Nadelung miteinander verbunden sind, und dadurch gekennzeichnet ist, daß die in der Metallfolie durch die Nadelung entstandene perforierte Fläche zwischen 8 und 15% der Grundfläche der Trägereinlage beträgt, sowie ein Verfahren zur ihrer Herstellung.

Unter der perforierten Fläche ist die Gesamtfläche der durch die Nadelung durchbrochenen Metalloberfläche zu verstehen.

Vorzugsweise treten an den Perforationen der Metalloberfläche eine Anzahl von Fasern oder Filamenten der textilen Schicht durch die Metalloberfläche aus.

Die in der erfindungsgemäßen Trägereinlage vorhandenen textilen Schichten können gewebt oder nicht gewebt sowie natürlichen oder synthetischen Ursprungs sein. Die textilen Schichten können Gewebe, Gelege, Gewirke oder vorzugsweise Vliesstoffe sein. Die Synthesefasern können entweder in Form von Stapelfasern oder in Form von Endlosfilamenten in den textilen Schichten der erfindungsgemäßen Trägereinlage enthalten sein. Bevorzugt sind solche Trägereinlagen in denen mindestens eine textile Schicht aus einem Vliesstoff besteht, ganz besonders bevorzugt sind Vliesstoffe die aus endlosen Filamenten, sogenannten Spunbonds, bestehen. Das Flächengewicht der textilen Schichten beträgt üblicherweise 100 bis 400 $g/m^2$. Bevorzugt werden textile Schichten mit einem Flächengewicht von 150 bis 300 $g/m^2$. Als natürliche Fasermaterialien für die textilen Schichten kommen z.B. Cellulose, Jute, Baumwolle oder Mischungen dieser Fasern in Betracht. Die textilen Schichten bestehen bevorzugt aus synthetischem Fasermaterial , wie z.B. Polyamiden, Polyvinylalkohol Polyacrylnitril oder Polyestern. Bei den Synthesefasern werden bevorzugt Polyesterfasern verwendet, insbesonder Fasern aus Polyethylenterephthalat. Bevorzugte Polyethylenterephthalate sind beispielsweise in der DE-OS 3 821 011 beschrieben.

Als Metallfolien können alle handelsüblichen Typen verwendet werden, die sich durch gute Wärmeleitfähigkeitseigenschaften auszeichnen, wie Folien aus Kupfer, Zinn und Aluminium. Als bevorzugtes Material für die Metallfolie kommt Aluminium in Frage. Die Dicke der Metallfolie beträgt üblicherweise zwischen 5 und 150 µm.

Die Herstellung der erfindungsgemäßen Trägereinlage erfolgt in an sich bekannter Weise indem die Materialien der textilen Schichten und der Metallfolien zusammengeführt und miteinander vernadelt werden. Die auf den textilen Schichten befindlichen Metallfolien zeichnen sich im allgemeinem durch eine Oberfläche aus, die durch Bereiche unterschiedlich starker Fältelung gekennzeichnet ist. Sowohl die textilen Schichten als auch die Metallfolien sind bevorzugt mit einer Durchlöcherung versehen, die von einer Nadelung mit dem Nadelstuhl oder einer Nadelperforationsmaschine stammen. Bei dem Vorgang des Nadelns werden die aufeinanderliegenden Schichten von der Vliesseite her durchstoßen. Der Abstand der Durchstichstellen wird so groß gewählt, daß der Zusammenhang der Folie gewahrt bleibt. Die verwendeten Nadeln besitzen ein spitzes Ende und eine Anzahl von Haken die gestaffelt um den Schaft der Nadel ausgebildet sind. Dabei ziehen die Haken der Nadeln eine Anzahl von Fasern oder Filamenten der textilen Schicht durch die zunächst unversehrte Metalloberfläche.

Der Vorgang des Nadelns führt zu einer mechanischen Verfestigung der textilen Schichten. Ebenso kann diese Verfestigung nach herkömmlichen Methoden thermisch erfolgen, beispielsweise durch Verkleben der in der Hitze an ihrer Oberfläche weich gewordenen Faser; oder die Verfestigung erfolgt durch bekannte Bindemittel, wie z.B. Kunstharzdispersionen.

Ein wesentliches Kriterium der erfindungsgemäßen Trägereinlagen ist das Verhältnis zwischen perforierter Metalloberfläche zur Grundfläche der Trägereinlagen. Bei der erfindungsgemäßen Trägereinlage beträgt die in der Metallfolie durch Nadelung entstandene perforierte Fläche zwischen 8 bis 15% der Grundfläche der Einlage. Nach einer bevorzugten Ausführungsform beträgt die perforierte Fläche zwischen 10 und 15%.

Beispiel

Verbundfliesstoff, bestehend aus einem Polyestervlies von 160 g/qm mit einer Alufolie von 40 g/qm und imprägniert mit einer Binderdispersion von 50 g/qm. Es ist von besonderer Bedeutung, daß die Nadelung so gewählt wird, daß die in der Alufolie entstehende perforierte Fläche ( = Anteil der Löcher) zwischen 10 und 15% zu liegen kommt. Wenn die perforierte Fläche kleiner ist, besteht die Gefahr der Deckschichtablösung, ist sie größer, wird die durch die Alufolie bewirkte brandhemmende Eigenschaft aufgehoben.

Die Erfindung wird im folgenden beispielhaft anhand von Zeichnungen erläutert.

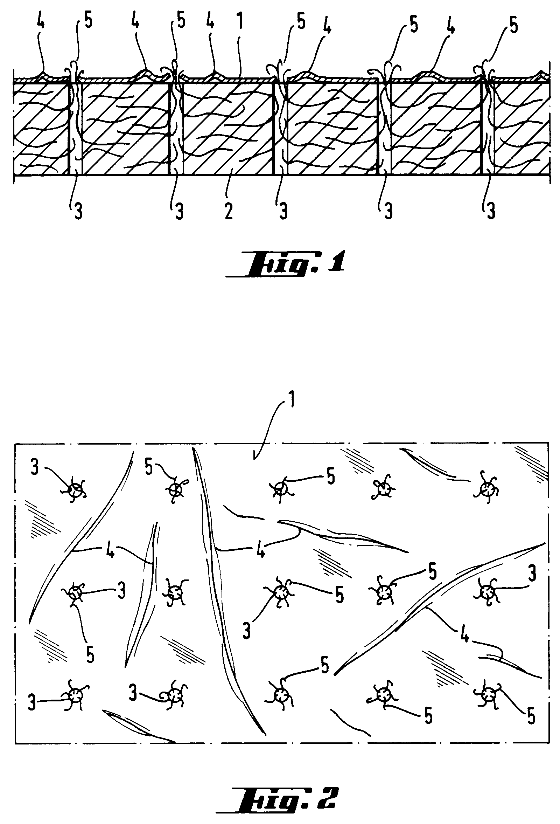

FIG. 1 zeigt einen Schnitt durch eine erfindungsgemäße Verstärkungseinlage. Sie besteht aus der perforierten und gefältelten Metallfolie 1 und der Vliesstoffbahn 2 (vorzugsweise hergestellt aus endlosen Filamenten). 3 stellt die Durchlöcherung der Verstärkungseinlage dar. 4 stellt die Fältelungen dar. 5 stellt die Fasern oder Filamente dar, die durch die Metalloberfläche ragen.

FIG. 2 zeigt eine Aufsicht auf die erfindungsgemäße Verstärkungseinlage.

**Patentansprüche**

1. Mehrschichtige Trägereinlage aus mindestens einer textilen Schicht und mindestens einer Metallfolie, die durch Nadelung miteinander verbunden sind, dadurch gekennzeichnet, daß die in der Metallfolie durch die Nadelung entstandene perforierte Fläche zwischen 8 und 15%, insbesondere zwischen 10 und 15%, der Grundfläche der Trägereinlage beträgt.

2. Mehrschichtige Trägereinlage nach Anspruch 1, dadurch gekennzeichnet, daß die textile Schicht ein Flächengewicht von 100 bis 400 $g/m^2$, insbesondere von 150 bis 300 $g/m^2$, hat.

3. Mehrschichtige Trägereinlage nach einem der Ansprüche 1 oder 2, dadurch gekennzeichnet, daß mindestens eine textile Schicht eine Vliesstoffbahn ist.

4. Mehrschichtige Trägereinlage nach Anspruch 3, dadurch gekennzeichnet, daß die Vliesstoffbahn aus endlosen Filamenten besteht.

5. Mehrschichtige Trägereinlage nach Anspruch 3, dadurch gekennzeichnet, daß die Vliesstoffbahn aus Polyesterfasern oder -filamenten, insbesondere aus Polyethylenterephthalat, besteht.

6. Mehrschichtige Trägereinlage nach einem der Ansprüche 1 bis 5, dadurch gekennzeichnet, daß die Metallfolien eine Dicke zwischen 5 und 150 µm haben.

7. Mehrschichtige Trägereinlage nach einem der Ansprüche 1 oder 6, dadurch gekennzeichnet, daß mindestens eine Metallfolie aus Aluminium besteht.

8. Verfahren zur Herstellung der Trägereinlage nach Anspruch 1 umfassend
   i) das Zusammenführen von textiler Schicht und Metallfolie, und
   ii) Verbinden der Schichten durch Nadelung in einer Weise, so daß die durch Nadelung entstehende perforierte Fläche 8 bis 15 % der Grundfläche der Trägereinlage beträgt.

9. Verwendung der Trägereinlage nach Anspruch 1 zur Herstellung von bituminierten Dach- und Abdeckbahnen.

Fig. 1

Fig. 2